# EUROPEAN PATENT SPECIFICATION

(11) **EP 0 347 161 B1**
(45) Date of publication and mention of the grant of the patent: **03.03.1993**
(21) Application number: 89305949.3
(22) Date of filing: 13.06.1989
(51) Int. Cl.: F24C 7/02, H05B 6/64, H05B 6/68, F24C 7/08

(54) **Heating apparatus**
Heizapparat
Appareil de chauffage

(30) Priority: 15.06.1988 JP 148925/88; 15.06.1988 JP 147529/88; 29.06.1988 JP 161383/88; 01.07.1988 JP 165220/88; 01.07.1988 JP 165221/88; 14.06.1988 JP 78982/88 U; 15.06.1988 JP 79919/88 U; 16.06.1988 JP 79721/88 U; 15.07.1988 JP 94310/88 U
(43) Date of publication of application: 20.12.1989
(60) Divisional application: 91202525.1
(73) Proprietor: SHARP KABUSHIKI KAISHA, Osaka 545 (JP)
(72) Inventor: Morino, Taisuke, Suita-shi Osaka-fu (JP); Tanaka, Mami, Yao-shi Osaka-fu (JP); Kaneko, Fuminori, Matsubara-shi Osaka-fu (JP); Ozaki, Takeyuki, Nara-shi Nara-ken (JP); Akiyama, Shuichi, Matsubara-shi Osaka-fu (JP)
(74) Representative: Brown, Kenneth Richard

(56) References cited:
- EP-A- 0 157 473
- DE-A- 2 951 434
- DE-A- 3 319 170
- DE-A- 3 514 506
- DE-A- 3 737 263
- US-A- 4 190 756
- US-A- 4 599 503
- US-A- 4 663 506
- US-E- 30 248

## Description

The present invention generally relates to types of heating apparatus and more particularly, to types of high-frequency heating apparatus such as electronic ranges, oven ranges, etc. in which the ingredients for making, for example, bread are put into a heating vessel loaded in a heating chamber such that the ingredients are processed automatically from kneading to baking.

Oven ranges are already available commercially in which bread ingredients are automatically processed to bake a loaf of bread from kneading to baking in a heating vessel loaded in a heating chamber. In conventional oven ranges, an annular ring is provided on the bottom of the heating vessel and a mating annular ring engageable with the annular ring of the heating vessel is provided on the bottom wall of the heating chamber in order to position the heating vessel on the bottom wall of the heating chamber. By inserting the heating vessel from above and rotating the heating vessel, the annular ring is brought into engagement with the mating annular ring. A downwardly oriented saw-tooth gear (face gear) is formed at the centre of the annular ring on the bottom of the heating vessel and an upwardly oriented mating saw-toothed gear (face gear) engageable with the face gear of the heating vessel is formed at the centre of the mating annular ring on the bottom wall of the heating chamber such that power for kneading cooking materials of bread is transmitted through vertical engagement between the face gear and the mating face gear.

However, in the case where a loaf of bread is baked in a conventional oven range, the following problems (1) to (3) arise:
(1) When the heating vessel is removed from the heating chamber, the heating vessel must be displaced upwardly. Thus, if baked bread projects above the upper edge of the heating vessel, the top of the bread may be brought into contact with the top wall of the heating chamber during removal. In order to eliminate this potential problem, the heating vessel must have a large horizontal area and the baked bread must be flat and small in height.
(2) If misalignment between the face gear and the mating face gear occurs, slip is produced between tooth surfaces of the face gear and those of the mating face gear. This results in noise generation during operation.
(3) In order to eliminate problem (2), the fit between the annular ring and the mating annular ring is made tight. As a result, a large force is required to install and remove the heating vessel. Thus, in some cases, a user may inadvertently strike his hand against the wall of the heating chamber, scorching his or her hand.

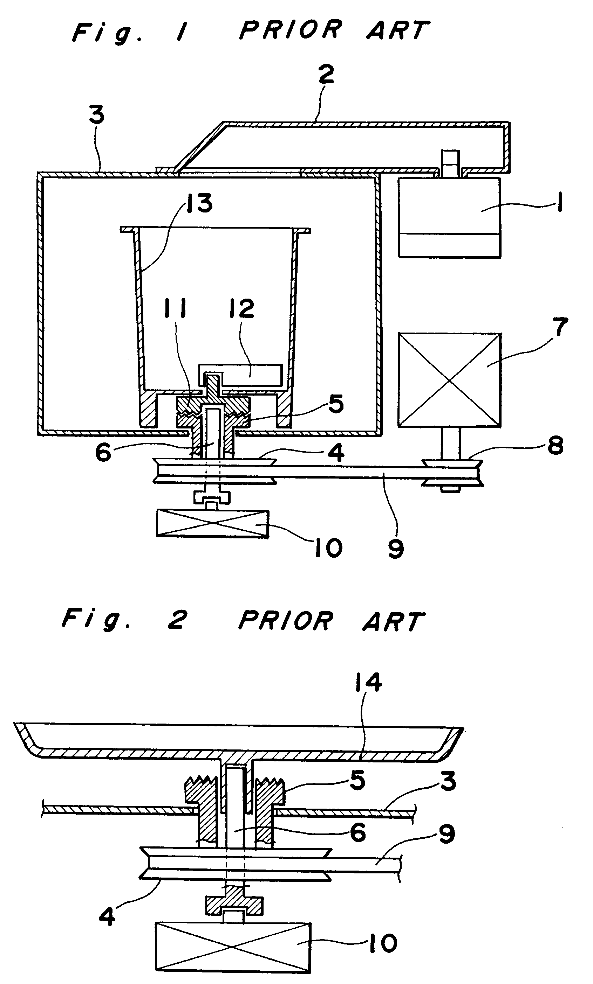

A type of high-frequency heating apparatus is known in which a heating vessel incorporating a stirring blade for kneading cooking materials and a turntable for rotating an article to be heated in order to eliminate nonuniform heating of the article are selectively loaded in a heating chamber. It has conventionally been a general practice that in order to eliminate nonuniform heating an article is placed on a turntable for heating during rotation of the turntable. Furthermore, recently, a type of high-frequency heating apparatus has been proposed in which a heating vessel incorporating a stirring blade is loaded in a heating chamber. In this prior art high-frequency heating apparatus, the ingredients of bread, for example, flour, water, sugar, butter, yeast, etc. are kneaded by the stirring blade, fermented, and then baked to make bread. One example of such a high-frequency heating apparatus is described with reference to Figs. 1 and 2. Microwaves are introduced from a magnetron 1, through a waveguide 2, into a heating chamber 3. A cylindrical transmission shaft 5 formed integrally with a driven pulley 4 and a drive shaft 6 inserted into the transmission shaft 5 are rotatably mounted on a bottom portion of the heating chamber 3 so as to project into the heating chamber 3. Rotation of a high-speed motor 7 is transmitted to the transmission shaft 5 via a belt 9 trained over a motor pulley 8 and the driven pulley 4. The drive shaft 6 is directly coupled to a low speed motor 10. A heating vessel 13 and a turntable 14 are selectively installed in the heating chamber 3 as shown in Figs. 1 and 2, respectively. A coupling shaft 11 is rotatably mounted on a bottom portion of the heating vessel 13 and a stirring blade 12 is coupled to the coupling shaft 11.

When the heating vessel 13 has been installed in the heating chamber 3 as shown in Fig. 1, the coupling shaft 11 is brought into engagement with the coupling shaft 5 to couple with the coupling shaft 5 such that the stirring blade 12 is rotated at speeds between tens and hundreds of revolutions per minute by the high-speed motor 7. As shown in Fig. 2, the turntable 14 is mounted on an upper portion of the drive shaft 6 for rotation at a speed of several revolutions per minute by the low-speed motor 10.

Thus, the stirring blade 12 and the turntable 14 are, respectively, driven by the different motors 7 and 10. When the dough is being made, the stirring blade 12 for kneading the bread ingredients must be rotated at a speed of tens to hundreds of revolutions per minute as described above. If the turntable 14 were to be rotated at that high speed, an article placed on the turntable 14 for heating would be scattered and there would be a high risk that the vessel containing the article would be broken.

In recent years, there has been a demand for a compact and inexpensive high-frequency heating apparatus which can be operated with ease. However, prior art types of high-frequency heating apparatus employ separate motors 7 and 10 for driving the stirring blade 12 and the turntable 14 and are consequently large in size and expensive, so that the above described demand is not satisfied.

Kinds of high-frequency heating apparatus are generally used for selectively heating a dielectric member by dielectric heating at high frequency. They are generally used by households as an electronic range. In recent years, the electronic range has become very popular as a cooking apparatus for heating various foods in addition to thawing and reheating of frozen foods.

Generally, when bread is being made, the ingredients such as flour, butter, sugar, salt, yeast, water, etc. are put into a heating vessel incorporating a stirring blade for kneading the ingredients, which are kneaded and then fermented at a temperature of between 30 and 40°C. Thereafter, the kneaded ingredients are heated and baked at high temperatures. As a result, it requires a long time, about 2 to 4 hours, to make bread.

When an electronic oven has a function that allows a cooking completion time to be preset so that bread is baked by the time a user has woken up, a still longer period is required to complete cooking of the bread once it has started. When cooking bread for such a long time, if the door of the electronic oven is kept open through improper operation by the user of mischief by children etc. during heating or during waiting time after the cooking completion time has been preset, heating may be held in a state of interruption. Even if the door is closed in the meantime the state of interruption will be maintained unless a heating operation is performed.

Even if the user notices that the door is open, and restarts the heating operation after closing the door, fermentation, for example, which progresses even if the door is left open for a prolonged period, may be excessive. On the other hand, if the door is kept open for a long time during baking, the temperature of the bread drops, and the bread may be baked insufficiently or the quality of the finished bread may be extremely inferior.

A type of high-frequency heating apparatus is known in which the heating vessel is made from a material that absorbs microwaves and generates heat. When bread is baked in a conventional high-frequency heating apparatus, the bread ingredients are initially kneaded in the heating vessel so as to make dough. Subsequently, the dough is fermented in the heating vessel and then, the heating vessel containing the dough is heated by microwaves to bake the bread.

However, in types of conventional high-frequency heating apparatus, the microwave heats the heating vessel made of material that absorbs microwaves and the temperature of the heating vessel is raised sharply. Hence, the surface of the dough, in contact with the heating vessel, is heated to a high temperature, while the temperature of the interior of the dough is not raised to the same extent. As there is a large difference in temperature between the surface and interior of the dough, the surface of the dough is likely to scorch before the interior of the dough is heated sufficiently.

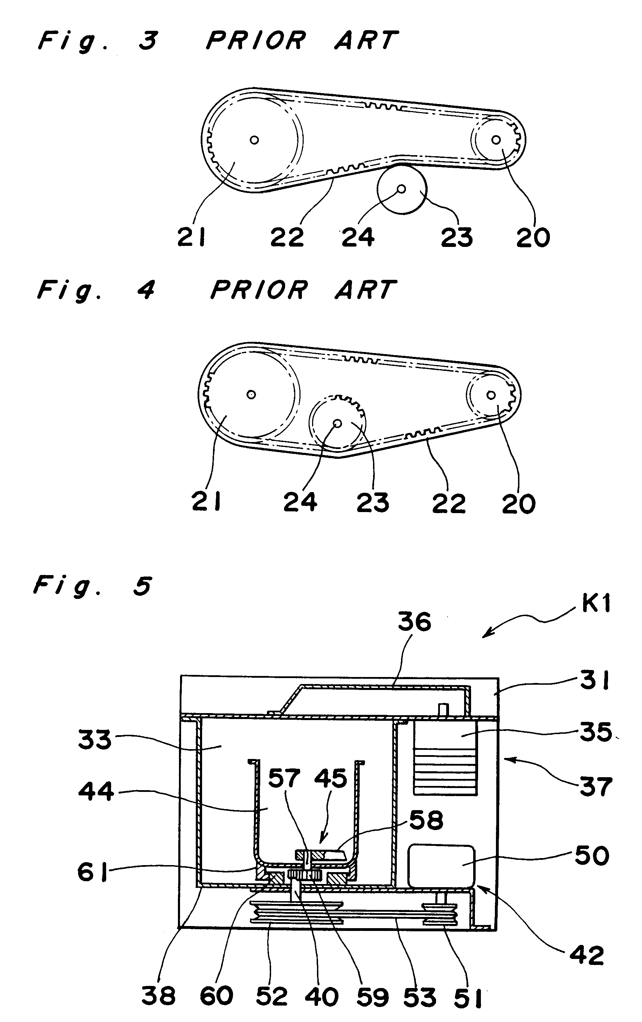

A timing belt mechanism such as that shown in Fig. 3 or 4 is used for the power transmission mechanism of a known type of high-frequency heating apparatus. The timing belt mechanism includes two rotary members spaced a predetermined distance from each other, i.e. a driving pulley 20 and a driven pulley 21, with a timing belt 22 is trained over the pulleys 20 and 21 so as to transmit power therebetween. Furthermore, an idler pulley 23 acting as an auxiliary rotary member is provided either outside (Fig. 3) or inside (Fig. 4) an intermediate portion of the timing belt 22 for rotation in a running direction of the timing belt 22. The auxiliary rotary member depresses the timing belt 22 so as to strain it. The idler roller 23 is rotatably supported by a shaft 24 mounted on a base member (not shown).

When the idler pulley 23 is disposed outside the timing belt 22 as shown in Fig. 3, the angle of winding the timing belt 22 over the driving pulley 20 can be made larger than is possible with the arrangement of Fig. 4 in which the idler pulley 23 is disposed inside the timing belt 22. The efficiency of power transmission can, therefore, be advantageously improved to a greater extent in the arrangement of Fig. 4.

In such timing belt mechanism arrangements, not only is abnormal noise produced through contact between the timing belt 22 and the pulleys 20 and 21 and through engagement and disengagement between the timing belt 22 and the pulleys 20 and 21 but the strained timing belt 22 also vibrates through variation in the load applied to the timing belt 22 to produce vibratory noise. Known types of high-frequency heating apparatus employing such timing belt mechanisms generate abnormal noise as well as vibratory noise.

Accordingly, the present invention aims to alleviate at least some of the aforementioned problems.

According to the present invention, there is provided a heating apparatus having a heating chamber and a heating vessel including a stirring mechanism and adapted to be detachably loaded in the heating chamber, the heating apparatus comprising driving means for transmitting a driving force for rotation of the stirring mechanism located within a said heating vessel characterised in that the driving means comprises a driving gear for transmitting the driving force for rotation of the stirring mechanism and in that the heating apparatus further comprises a guide means for guiding the heating vessel into the heating chamber through a side opening therein to bring a transmission gear of the stirring mechanism horizontally into engagement with the driving gear of the driving means.

Some preferred embodiments of the present invention will now be described by way of example with reference to the accompanying drawings, in which:
Fig. 1 is a schematic sectional view of a prior art high-frequency heating apparatus in which a heating vessel is loaded (already referred to);
Fig. 2 is a schematic fragmentary sectional view of the prior art apparatus of Fig. 1 in which a turntable is loaded (already referred to);
Figs. 3 and 4 are views showing arrangements of prior art timing belt mechanisms, respectively (already referred to);
Fig. 5 is a sectional view of a high-frequency heating apparatus according to a first embodiment of the present invention;
Fig. 6 is a perspective view of a heating vessel and a guide mechanism employed in the apparatus of Fig. 5;
Figs. 7a and 7b are views showing direction of displacement on the heating vessel of Fig. 6;
Fig. 8 is a sectional view showing coupling between a stirring mechanism of the heating vessel and a rotational drive mechanism in the apparatus of Fig. 5;
Fig. 9 is a sectional view showing coupling between a turntable and the rotational drive mechanism of Fig. 8;
Fig. 10 is a top plan view showing engagement between a rotational support member of the turntable and a coupling gear in the apparatus of Fig. 5;
Fig. 11 is a side elevational view of the heating vessel of Fig. 6;
Figs. 12 and 13 are sectional views showing unlocking and locking states of a locking mechanism employed in the apparatus of Fig. 5, respectively;
Figs. 14 and 15 are a bottom view and a side elevational view of the guide mechanism of Fig. 6 and the locking mechanism of Fig. 13, respectively;
Figs. 16 and 17 are a bottom view and a side elevational view showing the locking state of the locking mechanism of Fig. 13, respectively;
Fig. 18 is a perspective view of the apparatus of Fig. 5;
Fig. 19 is a sectional view showing a modification of the locking mechanism of Fig. 13; and
Fig. 20 is a perspective view showing a modification of the guide mechanism of Fig. 6.
Fig. 21 is a sectional view of a high-frequency apparatus including a sensor for detecting the presence of a heating vessel;
Fig. 22 is an enlarged view of the sensor of Fig. 21;
Fig. 23 is a block diagram showing operation of the apparatus of Figs. 21 and 22;
Fig. 24 is a side elevation of a modification of the apparatus of Fig. 22 in accordance with a second embodiment of the present invention;
Fig. 25 is a front elevational view of the apparatus of Fig. 24;
Fig. 26 is an enlarged sectional view of the apparatus of Fig. 24; and
Fig. 27 is a perspective view of a projection of the apparatus of Fig. 24.

Before the description of the present invention proceeds, it is to be noted that like parts are designated by like reference numerals throughout several views of the accompanying drawings.

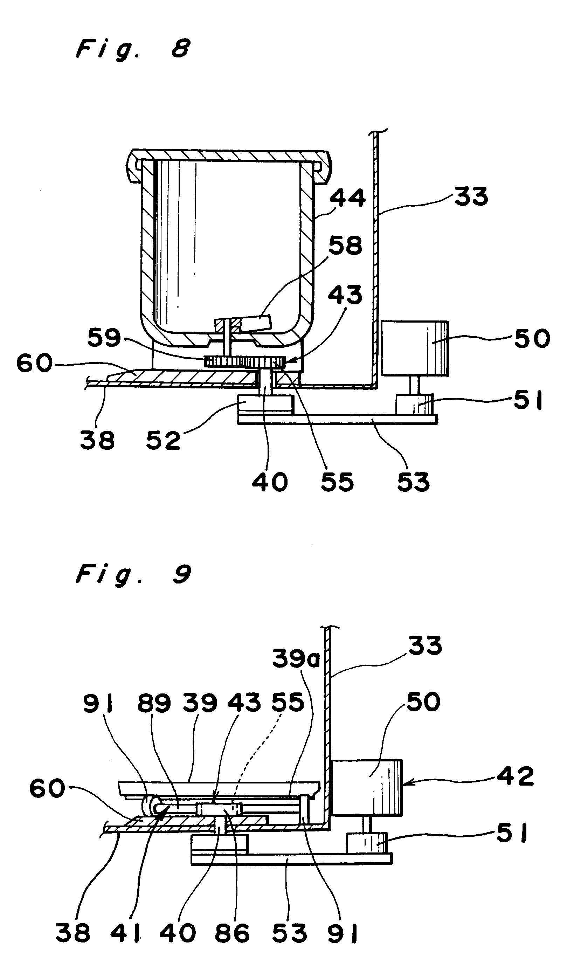

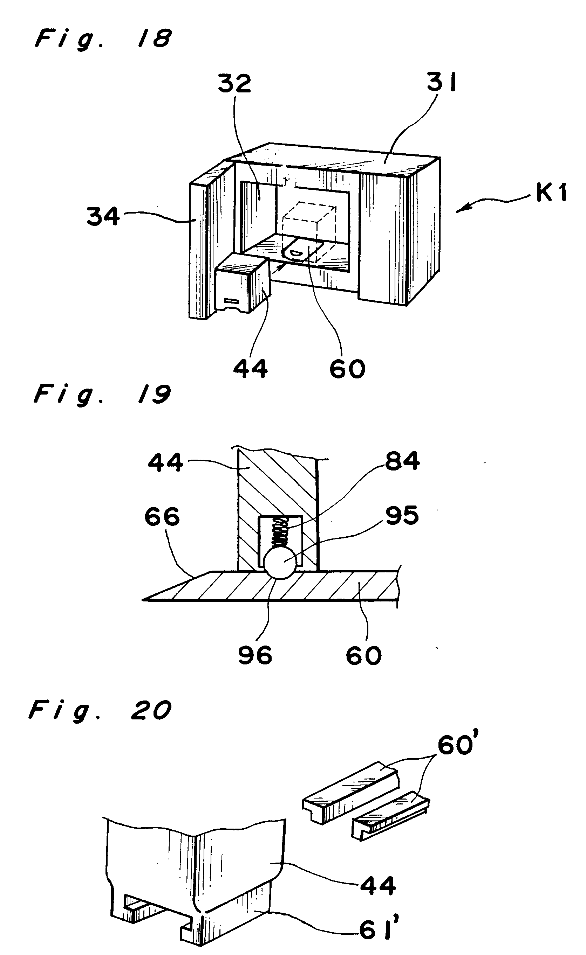

Referring now to the drawings, there is shown in Figs. 5 to 20, a high-frequency heating apparatus K1 according to the present invention. The apparatus K1 is an electronic oven or an oven range that allows insertion of a heating vessel for making bread. The apparatus K1 includes a rectangular apparatus housing 31 and a heating chamber 33. The heating chamber 33 has an opening 32 (Fig. 18) in a side face of the apparatus housing 31 such that an article to be heated can be placed in or taken out of the heating chamber 33. The apparatus K1 further includes a door 34 for closing the opening 32, a heating means 37 for heating an article in the heating chamber 33, a tray or turntable 39 for supporting the article, a rotational support member 41 for rotating the turntable 39 about a central shaft 40 supported rotatably by a bottom wall 38 of the heating chamber 33. There is also provided a rotational drive mechanism 42 for driving the rotational support member 41 of a rotation and a coupling mechanism 43 for transmitting driving force from the rotational drive mechanism 42 to the rotational support member 41. The heating means 37 is a magnetron 35 and a waveguide 36. The turntable 39 is detachably placed on the bottom wall 38 of the heating chamber 33.

The apparatus K1 also includes a heating vessel 44 for accommodating the article, a stirring mechanism 45 provided in the heating vessel 44, and a guide mechanism 46 for guiding the heating vessel 44 to horizontally displace the heating vessel 44 into the heating chamber 33 through the opening 32. A locking mechanism 47 is provided for locking the heating vessel 44 in a position in the stirring mechanism 45 and the coupling mechanism 43 are coupled together for operation. The heating vessel 44 is detachably loadable in the heating chamber 33.

The rotational drive mechanism 42 serves to rotate not only the turntable 39 but also the stirring mechanism 45. As shown in Fig. 5, the rotational drive mechanism 42 includes an electric motor 50 mounted in the apparatus housing 31, a driving pulley 51 secured to an output shaft of the electric motor 50, a driven pulley 52 mounted on a lower end of the central shaft 40 and a belt 53 trained over the pulleys 51 and 52. The coupling mechanism 43 includes a gear 55 mounted on an upper end of the central shaft 40 in the heating chamber 33 such that the gear 55 is engaged not only with the rotational support member 41 but also with a transmission gear 59 provided on the lower side of the stirring mechanism 45. The heating vessel 44 has a boxlike shape, and is open at its upper face. Bread ingredients are put into the heating vessel 44 and the stirring mechanism 45 kneads the ingredients to produce a dough. The stirring mechanism 45 includes a stirring shaft 57 vertically extending through the bottom wall 38 of the heating vessel 44, a stirring blade 58 mounted on the upper end of the stirring shaft 57 and the transmission gear 59 that is securely fitted to the lower end of the stirring shaft 57.

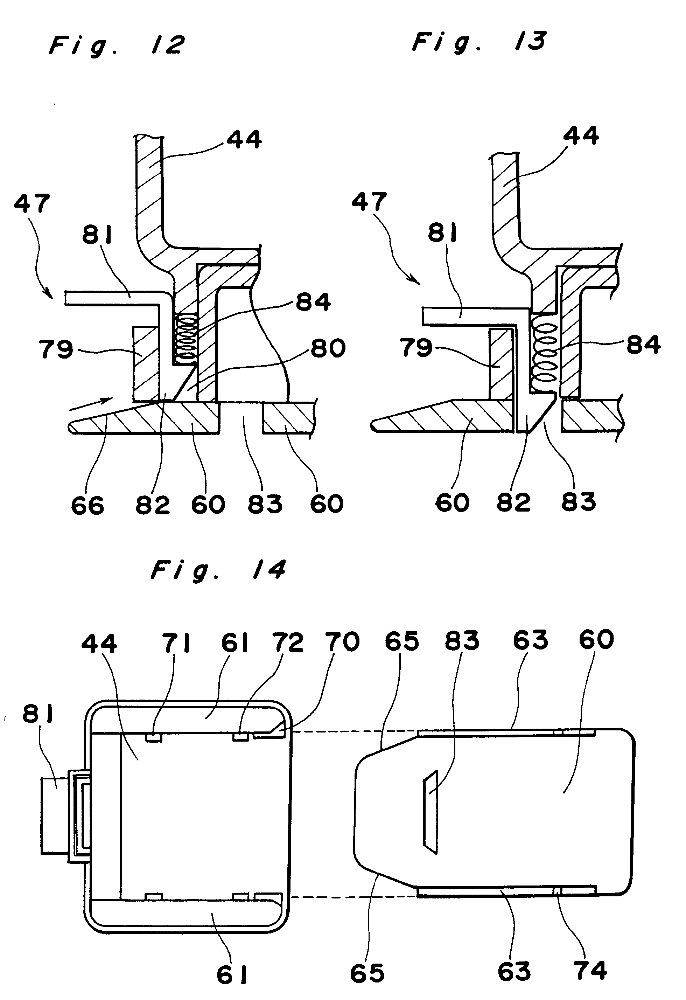

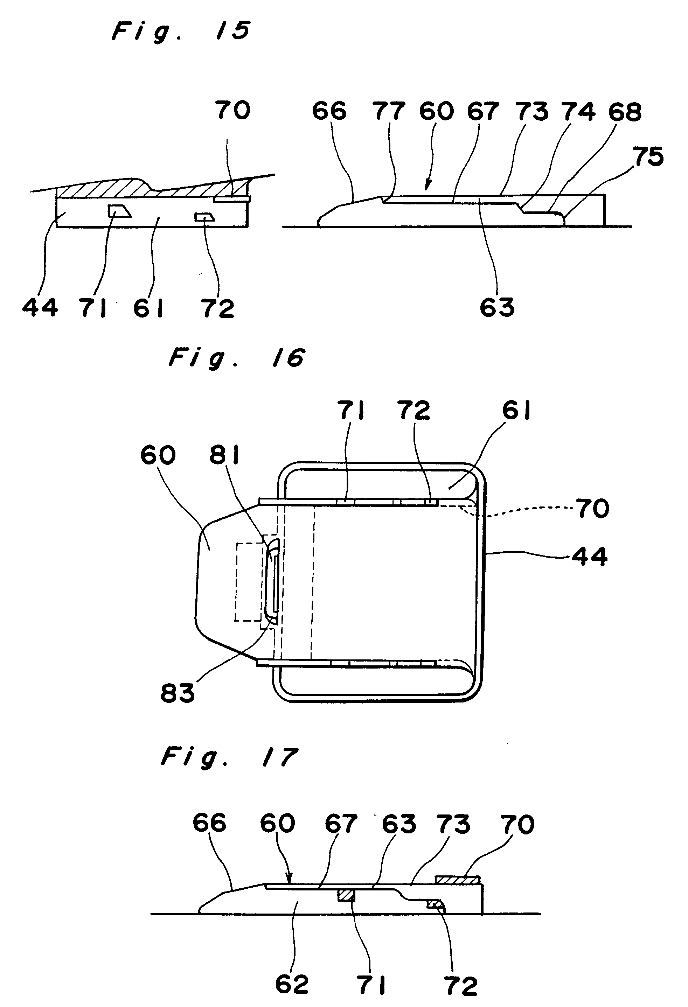

The line connecting the centre of the transmission gear 59 of the stirring mechanism 45 and the centre of the gear 55 of the coupling mechanism 43 and the line of displacement of the heating vessel 44 when being guided into the heating chamber form an angle α of between 0 and 90° as will be described later. The guide mechanism 46 includes a guide base 60 mounted, below the gear 55, on the bottom wall 38 of the heating chamber 33 and a pair of legs 61 extending downwardly from a bottom face of the heating vessel 44. As shown in Figs. 14 and 15, the guide base 60 includes a support portion 62 shaped as a rectangular parallelopiped and a pair of lugs 63 extending laterally outwardly from opposite sides of the support portion 62. In order to facilitate insertion of the guide base 60 between the legs 61, a pair of oblique cutout faces 65 are formed at opposite sides of the front end of the guide base 60 and an inclined face 66 is formed on the upper face of the front end of the guide base 60 as shown in Fig. 15. The lug 63 has first and second step portions 67 and 68 is formed stepwise to enable the heating vessel 44 to be locked in position.

First, second and third ribs 70, 71 and 72 are formed on an inner side face of each of the legs 61 so that they are guided by the lugs 63. The first rib 70 projects from a rear upper end portion of the inner side face of the leg 61 so it can slide along an upper face 73 of the lug 63. The second rib 71 projects from a substantially central portion of the inner side face of the leg 31 so as to allow it to slide along a lower face of the first step portion 67 of the lug 63 and is so disposed as to be brought into contact with an intermediate oblique face 74 between the first and second step portions 67 and 68. The third rib 72 is disposed, between the first and second ribs 70 and 71 and adjacent to the first rib 70, at a lower portion of the inner side face of the leg 61. The third rib 72 is slidable along the second step portion 68 of the lug 63 until it is brought into contact with a stopper 75 formed at a rear end of the lug 63. A chamfered face 77 is formed at the front end of the first step portion 67 to allow the second rib 71 to slide below the first step portion 67. Each of the first, second and third ribs 70, 71 and 72 is slidable the side faces of the support portion 62. Thus, the heating vessel 44 is supported in the heating chamber against vertical and lateral movement.

As shown in Figs. 11, 12 and 13, the locking mechanism 47 includes a holder 79 formed on a lower part of a front face of the heating vessel 44 and a substantially L-shaped locking lever 81 supported by the holder 79. The locking lever 81 is held in a vertical central hole 50 of the holder 79 with freedom for vertical movement. The locking mechanism 47 further includes a locking opening 83 formed in a central portion of the support portion 62 of the guide base 60, and a coiled spring 84 for urging the locking lever 81 downwardly. The locking opening 83 is detachably engaged with a wedge 82 formed at the lower end of the locking lever 81. The coiled spring 84 is positioned between an upper face of the wedge 82 of the locking lever 81 and a wall of the heating vessel 44 above the holder 79. The locking mechanism 47 also includes the first, second and third ribs 70, 71 and 72 and the first and second step portions 67 and 68 of the guide mechanism 46.

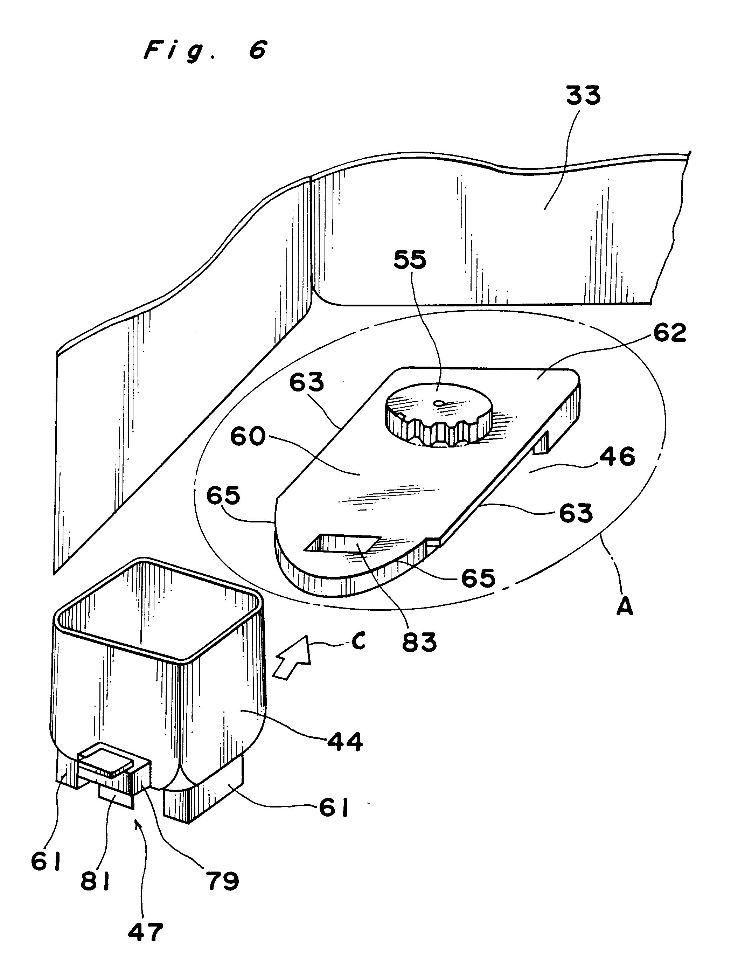

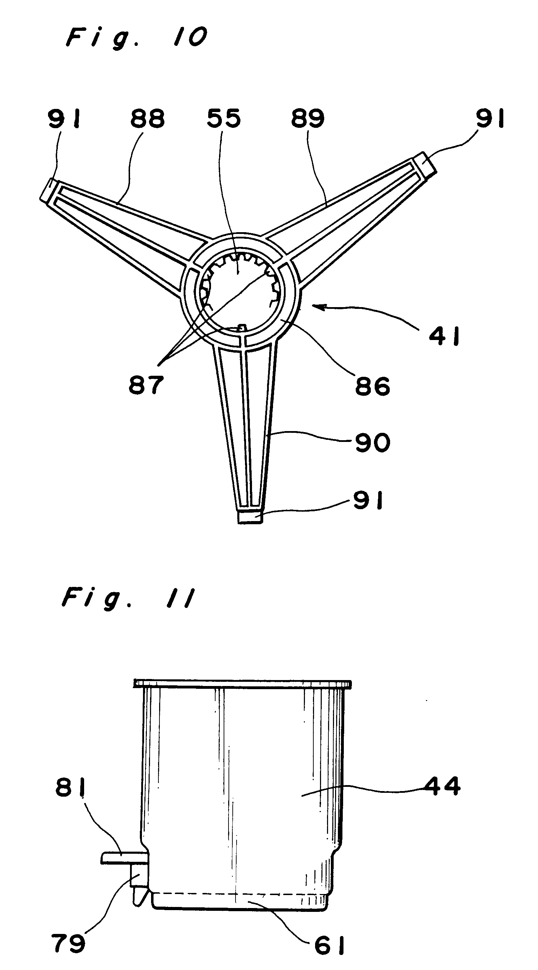

As shown in Fig. 10, the rotational support member 41 has a centrally located ring 86. Claws 87 are formed on the inner wall of the ring 86. These can be brought into engagement with the gear 55 by aligning the central ring 86 with the gear 55 and vertically displacing one relative to the other. Three support levers 88, 89 and 90 project radially from the outer periphery of the ring 86. A support roller 91 is rotatably supported at a distal end of each of the support levers 88 to 90. The support rollers 91 not only roll on the bottom wall 38 of the heating chamber 33 but are also in contact with a bottom face 39a of the turntable 39 to transmit rotational force to the turntable 39. A locus of the support rollers 91 is illustrated by the line A in Fig. 6.

In the apparatus K1, high frequency waves generated by the magnetron 35 are supplied, through the waveguide 36, to the heating chamber 33 to heat a food in the heating chamber 33 or the heating vessel 44. When the heating vessel 44 is used, food ingredients are put into the heating vessel 44. The heating vessel 44 slides along the bottom wall 38 into the heating chamber 33 in the direction of the arrow C in Fig. 6. Since the legs 61 are displaced along the oblique cutout faces 65 of the front end of the guide base 60, the lugs 63 fit between the legs 61 so that vertical and lateral displacement of the heating vessel 44 relative to the guide base 60 is prevented by the first, second and third ribs 40, 41 and 42. When the heating vessel 44 has been pushed fully into position the third rib 42 of the leg 61 strikes the stopper 75 of the guide base 60 and the heating vessel 44 is stopped. When this happens, the gear 59 and the transmission gear 55 are engaged with each other and the locking lever 81 falls into the locking opening 83 of the guide base 60. As a result, the heating vessel 44 is prevented from being pushed further forward by rotation of the gears 55 and 59.

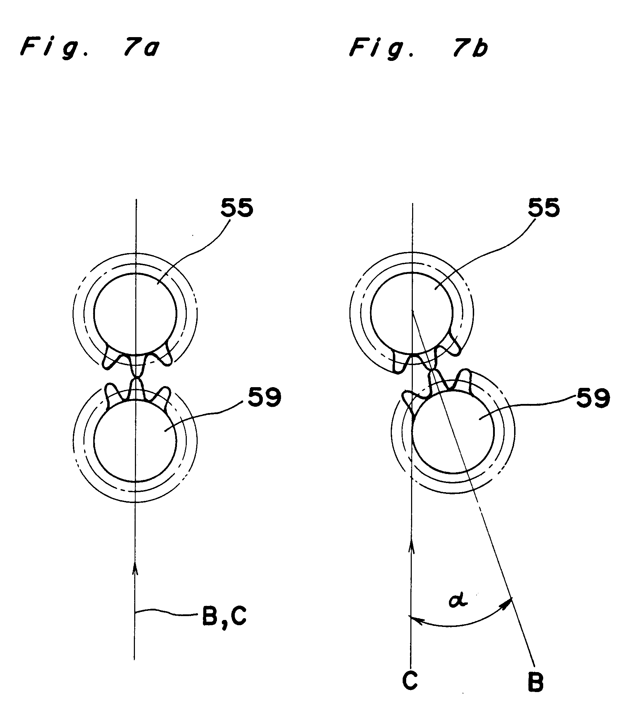

Figs. 7a and 7b illustrate the engagement between the transmission gear 59 and the gear 55. If a line B connecting centres of the gears 55 and 59 is coincident with the direction C of displacement of the heating vessel 44 as shown in Fig. 7a, the heating vessel 44 cannot be pushed to properly engage the teeth of gears 55 and 59 as the edges of the teeth of the gears 55 and 59 butt against each other. This problem can be avoided if the positional relation of the gears 55 and 59 is set so that the directions B and C form an angle α as shown in Fig. 7b. In this position, if the heating vessel 44 is pushed when edges of the teeth of the gears 55 and 59 butt against each other, a turning moment is applied to the gears 55 and 59, and engagement between the gears 55 and 59 occurs smoothly. The angle α ranges from 0 to 90° and desirably assumes a value closer to 90°.

Operation of the locking mechanism 47 is described below. When the legs 61 of the heating vessel 44 slide on the bottom wall 38, the first rib 70 initially slides onto the guide base 60 and then, the third rib 72 passes through the intermediate oblique face 74 to be stopped by the stopper 75. Simultaneously, the second rib 71 passes through the chamfered face 77 to be stopped by the intermediate oblique face 74. This eliminates vertical and lateral play of the heating vessel 44 relative to the guide base 60 by operation of the first, second and third ribs 70, 71 and 72.

Alternatively, as shown in Figs. 12 and 13, the locking lever 81 rides on the inclined face 66 of the guide base 60. Thus, at the same time as the third rib 72 is stopped by the stopper 75, the locking lever 81 extends into the locking opening 83 under action of the coiled spring 84. This state is shown in Figs. 16 and 17. In the position illustrated in Fig. 17, vertical and lateral play of the heating vessel 44 relative to the guide base 60 is eliminated by the first, second and third ribs 70, 71 and 72. Longitudinal play of the heating vessel 44 relative to the guide base 60 is also eliminated by the first rib 70 and the locking lever 81 so that the heating vessel is locked to the guide base.

In the present invention, since the heating vessel 44 is slidably inserted into the heating chamber 33, the heating vessel 44 is relatively large in comparison with the capacity of the heating chamber 33. Furthermore, by employing the oblique cutout face 65, the inclined face 66 and the coiled spring 84, the heating vessel 44 can be smoothly inserted into the heating chamber 33 and secured relative to the heating chamber 33.

Conventionally, in order to transmit a rotational force to the turntable 39, the rotational support member 41 is placed on the coupling mechanism (coupling) so that the turntable 39 is placed on the rotational support member 41. However, this known arrangement of the coupling mechanism does not provide a sufficient number of engaged portions for rotating the stirring mechanism 45 of the present invention.

In the present invention, the known coupling mechanism is replaced by the gear. This allows a single coupling mechanism 43, to both rotate the stirring blades 58 of the heating vessel 44 for making bread, etc. and to rotate the turntable 39. Namely, in power transmission to the stirring mechanism 45 when the heating vessel 44 is loaded, rotation of the electric motor 50 is transmitted to the belt 53 through the driving belt 53 to drive the driven pulley 52. Rotation of the driven pulley is transmitted via the central shaft 40 from the gear 55 to the transmission gear 59 to rotate the stirring blade 58 coupled with the transmission gear 59.

When the turntable 39 is placed on the guide base 60, the rotational transmission route from the electric motor 50 to the gear 55 is identical to that in the above case but the claws 87 of the rotational support member 41 for rotating the turntable 39 are brought into engagement with the gear 55 from above. The rotational support member 41 is, therefore, rotated through engagement between the claws 87 and the gear 55. The turntable 39 placed on the rotational support member 41 is able to rotate relative to the bottom wall 38 by operation of the support rollers 91 of the rotational support member 41. It is advantageous for operation of the apparatus K1 that the number of the claws 87 is set to a quotient obtained by dividing the number of teeth of the gear 55 by an integer.

It will be understood that the present invention is not limited to the above described embodiment and can be modified or changed variously. For example, an electric heater (not shown) can also be employed as a heating source. In order to promote generation of heat, a film made of material which generates heat upon absorption of microwave, for example, silicon carbide may be formed on the surface of the heating vessel 44.

Furthermore, as shown in Fig. 19, the locking lever 81 of the locking mechanism 47 can be replaced by a detent mechanism in which ball 95 is urged towards the guide base 60 by the coiled spring 84 so as to be detachably engaged with a recess 96 formed on the guide base 60.

Moreover, as shown in Fig. 20, the guide mechanism 46 can be replaced by an arrangement in which L-shaped legs 61′ are brought into engagement with a pair of L-shaped guide bases 60′.

As is clear from the foregoing description, in accordance with the first embodiment of the present invention, when ingredients are inserted into the heating chamber to be stirred and heated or only heated, the heating vessel can easily be inserted into the heating chamber by merely sliding it along the guide mechanism provided on the bottom wall of the heating chamber.

The line connecting the centres of the gear of the coupling mechanism and the transmission gear does not coincide with the sliding direction of the heating vessel. Instead it forms a proper angle with the sliding direction of the heating vessel. Thus, even if tooth edges of the gear of the transmission gear and the transmission gear are abutted against each other on engagement, the heating vessel can be pushed further to apply a rotational force to the gear of the coupling mechanism and the transmission gear so that the gear of the coupling mechanism and the transmission gear are brought fully into normal engagement with each other.

Since the heating vessel is locked to the guide base by the locking mechanism, the gear of the coupling mechanism and the transmission gear cannot be disengaged from each other inadvertently and reliable power transmission from the gear of the coupling mechanism to the transmission gear is ensured.

Moreover, since the coupling mechanism includes a gear, a single coupling mechanism can be used to rotate both the transmission gear for rotating the stirring blade of the heating vessel for making bread, etc. and the rotational support member for rotating the turntable. Thus, the coupling mechanism can be simplified in structure through reduction of the number of components of the coupling mechanism.

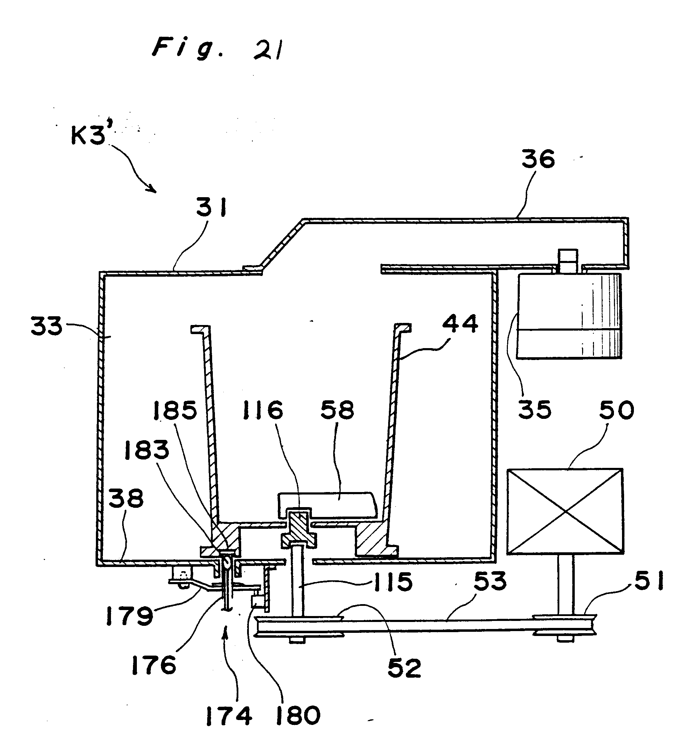

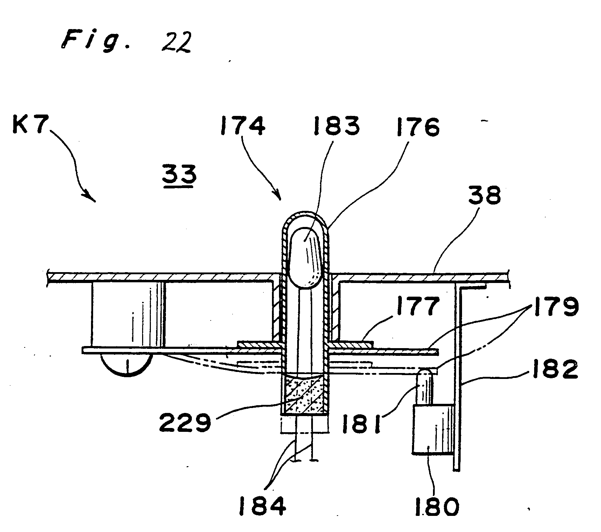

Referring further to Figs. 21 to 23, there is shown a high-frequency heating apparatus K7. Fig. 22 shows a sensor 174 for detecting the presence or absence of the heating vessel 44.

As shown in Figs. 21 and 22, the sensor 174 includes a tube 176, an elastic plate 179 and a detection switch 180 having a contact 181. The tube 176 is retractably fitted into a hole 175 in the bottom wall 38 of the heating chamber 33. The elastic plate 179 supports a flange 177 formed around an outer periphery of the tube 176 and one end of the elastic plate 179 is attached to a boss 178 secured to a lower face of the bottom wall 38. The detection switch 180 is attached to a bracket 182 fixed to the lower face of the bottom wall 38 and is turned on by downward movement of the elastic plate 179 through contact of the elastic plate 179 with the contact 181. A temperature detecting element 183, such as a thermistor, having lead wires 184 is inserted into the tube 176. Meanwhile, an opening 185 is formed in a lower face of the heating vessel 44 so as to receive an upper end portion of the tube 176.

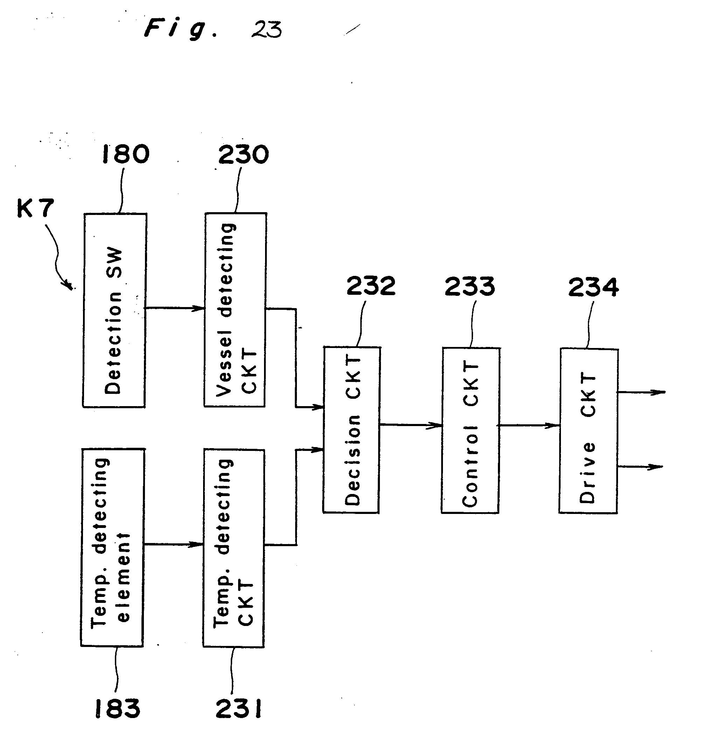

Fig. 23 shows an electric circuit of the apparatus K7. In Fig 23, detection signals of the detection switch 180 and the temperature detecting element 183 are inputted, through a vessel detecting circuit 230 and a temperature detecting circuit 231, respectively, to a decision circuit 232 constituted by a single LSI, in which contents of the detection signals are decided. The decision signal of the decision circuit 232 is inputted to a control circuit 233. In accordance with a cooking mode selected by an operating switch (not shown), the control circuit 233 controls operation of the magnetron 35, the electric motor 50, etc. through a drive circuit 234.

Hereinbelow, operation of the apparatus K7 of the above described arrangement is described. Initially, when the heating vessel 44 containing the ingredients for making bread such as flour, butter, sugar, salt, yeast, water, etc. is placed at a predetermined position in the heating chamber 33, the lower face of the heating vessel 44 depresses the tube 176 downwardly, so that the elastic plate 179 is bent downwardly and thus, the contact 181 of the detection switch 180 is depressed by the free end portion of the elastic plate 179 so as to turn on the detection switch 180. When the heating vessel 44 has been inserted as described above, the electric motor 50 is started by command from the control circuit 233 so as to rotate the stirring blade 58 of the heating vessel 44. Thus, the ingredients are kneaded to produce dough. After kneading, this dough is heated by microwaves produced by the magnetron 35, or heat produced by a heater (not shown) provided in the heating chamber 33 to ferment and bake the dough.

During this period, the heating effect produced by the magnetron 35 or heater must be controlled accurately in accordance with the temperature of the dough. As the temperature detecting element 183 is accommodated in the tube 176 held in contact with the bottom of the heating vessel 44, the temperature detecting element 183 detects the temperature of the dough through the bottom wall of the heating vessel 44. The temperature detecting element 183 can, therefore, detect the actual temperature of the dough accurately without being affected by the ambient temperature of the heating chamber 33. This allows the temperature to be controlled accurately on the basis of the actual temperature of the dough.

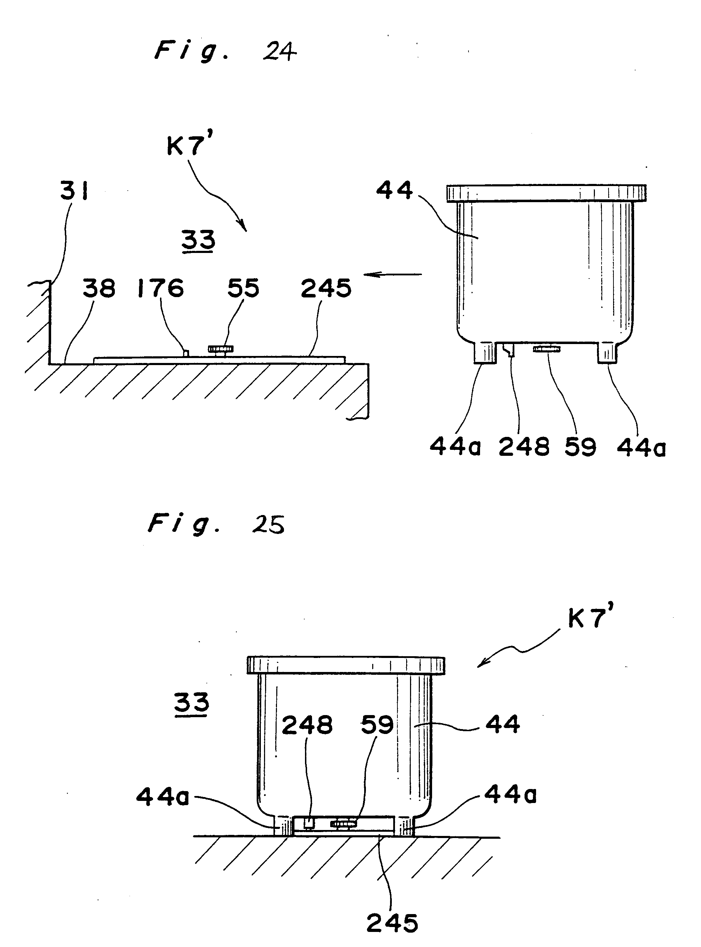

Referring to Figs. 24 to 27, a modification K7′ of the apparatus K7 in accordance with a second embodiment of the invention is illustrated. In the apparatus K7, the heating vessel 44 is placed on the bottom of the heating chamber 33 from above so as to depress the tube 176 downwardly. However, in the apparatus K7′, the heating vessel 44 slides horizontally into the heating chamber 33 rearwards from the front of the heating chamber 33 so as to depress the tube 176 downwardly. As shown in Figs. 24 and 25, a pair of legs 44a are provided on the lower face of the heating vessel 44 and a guide 245 for guiding the legs 44a in forward and rearward directions of the apparatus housing 31 is provided on the inner face of the bottom wall 38 of the heating vessel 33 such that the heating vessel 44 can be inserted rearwardly into the heating chamber 33 horizontally from the front of the heating chamber 33.

The heating vessel 44 is provided with a transmission gear 59 and a gear 55 engageable with the transmission gear 59 is provided on the bottom of the heating chamber 33. When the heating vessel 44 has been loaded at a predetermined position in the heating chamber 33, the heating vessel 44 is engaged with the guide 245 and it is, therefore, possible to prevent vibration of the heating vessel 44 during kneading.

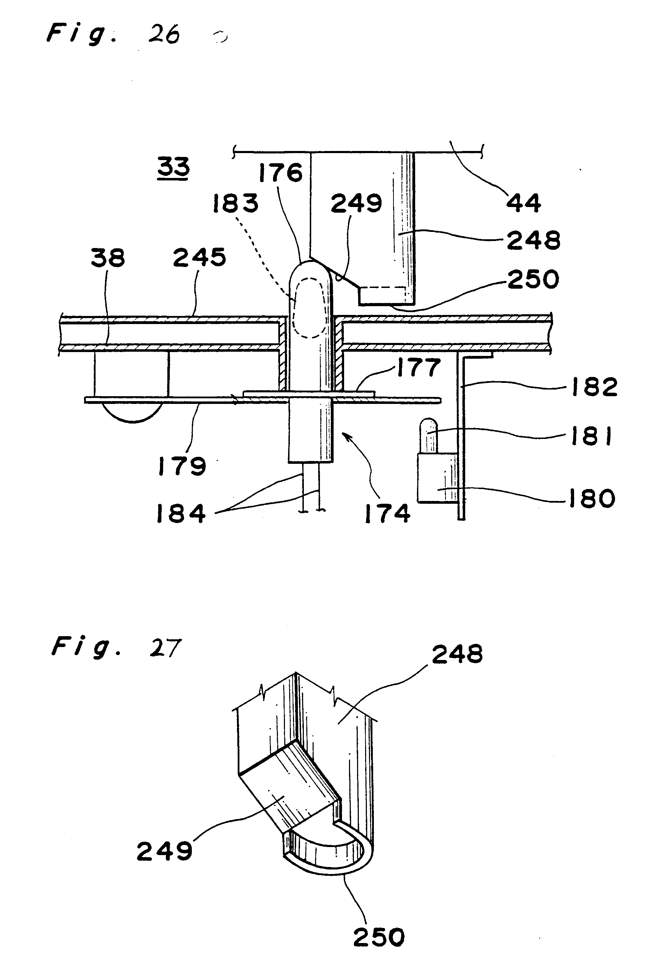

As is clearly shown in Figs. 26 and 27, a projection 248 for depressing the tube 176 downwardly is provided on the lower face of the heating vessel 44. The projection 248 is formed, with an oblique face 249 that first comes into contact with the projection 248. At the lower end of the oblique face 249, there is a skirt 250 having an opening for receiving the tube 176.

In the apparatus K7′ of the above described arrangement, as the legs 44a of the heating vessel 44 slide along the guide 245, the oblique face 249 of the projection 248 initially contacts the tube 176. Hence, the tube 176 is smoothly depressed downwardly by the oblique face 249 to fit into the skirt 250. At this time, the transmission gear 59 of the heating vessel 44 is brought into engagement with the gear 55 of the apparatus housing 31 so that the stirring blades 58 in the heating vessel 44 can be rotated.

When the tube 176 has been depressed downwardly by the projection 248, the detection switch 180 is turned on through the elastic plate 179, so that the presence of the heating vessel 44 is detected by the detection switch 180 and the temperature of the dough is detected by the temperature detecting element 183 through the bottom wall of the heating vessel 44 in the same manner as in the apparatus K7. In the apparatus K7′, since the distal end portion of the tube 176 is enclosed by the skirt 250, the temperature detecting element 183 accommodated in the tube 176 is not affected by ambient heat and can, therefore, accurately detect the temperature of the dough.

Although the temperature detecting element 183 is inserted into the tube 176, the temperature detecting element 183 need not necessarily be wholly covered by the tube 176 but may instead be partially exposed. Furthermore, in the apparatuses K7 and K7′, although the heating vessel 44 provided with the stirring blade 58 and having a bread making function has been described it can be replaced by any vessel that can contain an article to be heated.

Accordingly, in accordance with the second embodiment of the present invention, since the temperature detecting element is provided in the tube held in contact with the heating vessel, the temperature of the article in the heating vessel can be detected by the temperature detecting element through the bottom wall of the heating vessel. Therefore, since the temperature of the article in the heating vessel can be detected accurately without being affected by the ambient temperature of the heating chamber, cooking that requires accurate temperature control, for example, the baking of bread can be performed properly.

Furthermore, in the second embodiment of the present invention, since the vessel detecting portion for detecting the heating vessel acts also as a temperature detecting portion, construction of the vessel detecting portion and the temperature detecting portion is simplified.

Moreover, in the second embodiment of the present invention, since the temperature detecting element is accommodated in the tube, the temperature detecting element is protected by the wall of the tube and thus, damage to the temperature detecting element can be prevented.

## Claims

1. A heating apparatus (K1) having a heating chamber (33) and a heating vessel (44) including a stirring mechanism (45) and adapted to be detachably loaded in the heating chamber (33), the heating apparatus (K1) comprising driving means (42, 43) for transmitting a driving force for rotation of the stirring mechanism (45) located within a said heating vessel (44) characterised in that the driving means (42, 43) comprises a driving gear (55) for transmitting the driving force for rotation of the stirring mechanism (45) and in that the heating apparatus further comprises a guide means (46) for guiding the heating vessel (44) into the heating chamber (33) through a side opening therein to bring a transmission gear (59) of the stirring mechanism (45) horizontally into engagement with the driving gear (55) of the driving means (42, 43).

2. A heating apparatus according to claim 1 wherein the heating apparatus is a high frequency heating apparatus.

3. A heating apparatus according to claim 1 or claim 2 wherein the direction in which the guide means guides the heating vessel for engagement of the transmission gear (59) with the driving gear (55) is different from the direction of a line connecting the centres of the driving gear (55) and the transmission gear (59) when engaged.

4. A heating apparatus according to claim 3, wherein the angle α, between said directions is between 0 and 90 degrees.

5. A heating apparatus according to any of claims 1 to 4 wherein the guide means comprises a guide base (60, 61′) for attachment to the floor of the heating chamber (33) below the level of the transmission gear (59), said guide base being adapted for mating engagement with a corresponding guide track (61, 60′) located on the base of the heating vessel (44).

6. A heating apparatus according to claim 5 wherein the guide base (60, 61′) is substantially planar and the guide track comprises first and second projections directed downwardly from the bottom of the heating vessel (44).

7. A heating apparatus according to claim 6 wherein the guide base comprises a pair of upwardly projecting track members and the guide track comprises a pair of mating track members projecting downwardly from the bottom of the heating vessel (44).

8. A heating apparatus according to any one of claims 1 to 7 further comprising a locking mechanism (47, 95) for locking the heating vessel (44) in position relative to the heating chamber (33) with the driving gear (55) in engagement with the transmission gear (59).

9. A heating apparatus according to claim 8 wherein the locking mechanism (47, 95) comprises a spring biased locking member (82, 95) and a locking opening (83, 96).

10. A heating apparatus according to any one of claims 1 to 9 further comprising a turntable (39) for supporting an article for heating, and a rotational support member for rotatably supporting said turntable on the bottom wall (38) of said heating chamber (33) the arrangement being such that either said heating vessel, or said turntable and rotational support member are selectively mounted in said heating chamber; wherein said rotational support member includes a central ring portion (86) which is adapted for engagement with the driving gear (55) whereby both the driving force for rotation of the stirring mechanism (45) and the driving force for rotation of the turntable are provided by the driving gear (55).

11. A heating apparatus according to claim 10 wherein said ring is formed with a set of circumferentially spaced, inwardly projecting claws for engaging the driving gear (55).

12. A heating apparatus according to claim 11 wherein the number of said claws is a quotient obtained by dividing the number of teeth of said driving gear (55) by an integer.

13. A heating apparatus according to any of claims 10 to 12 wherein said rotational support member (41) includes support rollers (91) to facilitate rotation of the turntable relative to said bottom wall (38) of said heating chamber.

14. A heating apparatus (K1, K7′) according to any one of the preceding claims further comprising:
a contact member (176) for detecting the presence or absence of a heating vessel (44); and
a temperature detecting means (183) for detecting the temperature of the heating vessel (44).

15. A heating apparatus according to claim 14 wherein the temperature detecting means is disposed on the contact member.

## Patentansprüche

1. Heizgerät (K1) mit einer Heizkammer (33) und einem Heizgefäß (44) mit einem Rührmechanismus (45) das auswechselbar in die Heizkammer (33) eingesetzt ist, welches Heizgerät (K1) eine Antriebseinrichtung (42, 43) zum Übertragen einer Dreh-Antriebskraft für den innerhalb des Heizgefäßes (44) angeordneten Rührmechanismus (45) aufweist, **dadurch gekennzeichnet,** daß die Antriebseinrichtung (42, 43) eine Antriebsverzahnung (55) zum Übertragen der Antriebskraft zur Drehung des Rührmechanismus (45) aufweist und daß das Heizgerät ferner eine Führungseinrichtung (46) zum Einführen des Heizgefäßes (44) in die Heizkammer (33) durch eine Seitenöffnung in derselben aufweist, um eine Übertragungsverzahnung (59) des Rührmechanismus (45) horizontal in Eingriff mit der Antriebsverzahnung (55) des Antriebsmechanismus (42, 43) zu bringen.

2. Heizgerät nach Anspruch 1, bei dem das Heizgerät ein Hochfrequenzheizgerät ist.

3. Heizgerät nach Anspruch 1 oder Anspruch 2, bei dem die Richtung, in der die Führungseinrichtung das Heizgefäß für den Eingriff der Übertragungsverzahnung (59) mit der Antriebsverzahnung (55) führt, von der Richtung einer Linie verschieden ist, die die Mitten der Antriebsverzahnung (55) und der Übertragungsverzahnung (59) miteinander verbindet, wenn diese miteinander in Eingriff stehen.

4. Heizgerät nach Anspruch 3, bei dem der Winkel α zwischen den genannten Richtungen zwischen 0 und 90° liegt.

5. Heizgerät nach einem der Ansprüche 1 bis 4, bei dem die Führungseinrichtung einen Führungssockel (60, 61′) für Befestigung am Boden der Heizkammer (33) unter der Höhe der Übertragungsverzahnung (59) aufweist, welcher Führungssockel für passenden Eingriff mit einer entsprechenden Führungsschiene (61, 60′) ausgebildet ist, die am Boden des Heizgefäßes (44) angeordnet ist.

6. Heizgerät nach Anspruch 5, bei dem der Führungssockel (60, 61′) im wesentlichen eben ist und die Führungsschiene einen ersten und einen zweiten Vorsprung aufweist, die sich vom Boden des Heizgefäßes (44) aus nach unten erstrecken.

7. Heizgerät nach Anspruch 6, bei dem der Führungssockel ein Paar sich nach oben erstreckende Schienenteile aufweist und die Führungsschiene ein Paar passender Schienenteile aufweist, die sich vom Boden des Heizgefäßes (44) aus nach unten erstrecken.

8. Heizgerät nach einem der Ansprüche 1 bis 7, das ferner einen Verriegelungsmechanismus (47, 95) aufweist, zum Verriegeln des Heizgefäßes (44) in einer Position relativ zur Heizkammer (33), in der die Antriebsverzahnung (55) in Eingriff mit der Übertragungsverzahnung (59) steht.

9. Heizgerät nach Anspruch 8, bei dem der Verriegelungsmechanismus (47, 95) ein federbelastetes Verriegelungsteil (82, 95) und eine Verriegelungsöffnung (83, 96) aufweist.

10. Heizgerät nach einem der Ansprüche 1 bis 9, das ferner einen Drehtisch (39) zum Halten eines aufzuheizenden Gegenstandes und ein Drehhalteteil zum drehbaren Halten des Drehtischs auf der Bodenwand (39) der Heizkammer (33) aufweist, wobei die Anordnung dergestalt ist, daß entweder das Heizgefäß oder der Drehtisch und das Drehhalteteil wahlweise in der Heizkammer angeordnet sind, wobei das Drehhalteteil einen mittleren Ringabschnitt (83) aufweist, der für Eingriff mit der Antriebsverzahnung (55) ausgebildet ist, wobei sowohl die Antriebskraft zum drehenden Antreiben des Rührmechanismus (45) als auch die Antriebskraft zum drehenden Antreiben des Drehtischs von der Antriebsverzahnung (55) aufgebracht werden.

11. Heizgerät nach Anspruch 10, bei dem der Ring mit einem Satz in Umfangsrichtung voneinander beabstandeter, nach innen vorspringender Klauen zum Eingriff mit der Antriebsverzahnung (55) ausgebildet ist.

12. Heizgerät nach Anspruch 11, bei dem die Anzahl der Klauen ein Bruch ist, der durch Teilen der Anzahl der Zähne der Antriebsverzahnung (55) durch eine ganze Zahl erhalten wird.

13. Heizgerät nach einem der Ansprüche 10 bis 12, bei dem das Drehhalteteil (41) Haltewalzen (91) aufweist, um ein Verdrehen des Drehtisches relativ zur Bodenwand (38) der Heizkammer zu erleichtern.

14. Heizgerät (K1, K7′) gemäß einem der vorstehenden Ansprüche, das ferner folgendes aufweist:
- ein Kontaktteil (176) zum Erfassen des Vorhandenseins oder Fehlens eines Heizgefäßes (44); und
- eine Temperaturerfassungseinrichtung (183) zum Erfassen der Temperatur des Heizgefäßes (44).

15. Heizgerät nach Anspruch 14, bei dem die Temperaturerfassungseinrichtung am Kontaktteil angeordnet ist.

## Revendications

1. Appareil de chauffage (K1) comportant une chambre de chauffage (33) et un récipient de chauffage (44) comprenant un mécanisme d'agitation (45) et adapté pour être placé de façon amovible dans la chambre de chauffage (33), l'appareil de chauffage (K1) comprenant des moyens d'entraînement (42, 43) pour transmettre une force d'entraînement en vue de la rotation du mécanisme d'agitation (45) situé à l'intérieur dudit récipient de chauffage (44), caractérisé en ce que les moyens d'entraînement (42, 43) comprennent un engrenage d'entraînement (55) pour transmettre la force d'entraînement en vue de la rotation du mécanisme d'agitation (45) et en ce que l'appareil de chauffage comprend en outre des moyens de guidage (46) pour guider le récipient de chauffage (44) jusqu'à l'intérieur de la chambre de chauffage (33) par l'intermédiaire d'une ouverture latérale de cette dernière afin d'amener horizontalement un engrenage de transmission (59) du mécanisme d'agitation (45) à s'engager avec l'engrenage d'entraînement (55) des moyens d'entraînement (42, 43).

2. Appareil de chauffage selon la revendication 1, dans lequel l'appareil de chauffage est un appareil de chauffage haute fréquence.

3. Appareil de chauffage selon la revendication 1 ou la revendication 2, dans lequel la direction dans laquelle les moyens de guidage guident le récipient de chauffage en vue de l'engagement de l'engrenage de transmission (59) avec l'engrenage d'entraînement (55) est différente de la direction d'une ligne reliant les centres de l'engrenage d'entraînement (55) et de l'engrenage de transmission (59) dans leur condition engagée.

4. Appareil de chauffage selon la revendication 3, dans lequel l'angle α entre lesdites directions est compris entre 0 et 90 degrés.

5. Appareil de chauffage selon l'une quelconque des revendications 1 à 4, dans lequel les moyens de guidage comprennent une base de guidage (60, 61′) pour assurer la fixation au plancher de la chambre de chauffage (33) en dessous du niveau de l'engrenage de transmission (59), ladite base de guidage étant adaptée en vue de s'engager de façon complémentaire avec un rail de guidage correspondant (61, 60′) situé sur la base du récipient de chauffage (44).

6. Appareil de chauffage selon la revendication 5, dans lequel la base de guidage (60, 61′) est sensiblement plane et le rail de guidage comprend des première et seconde saillies dirigées vers le bas à partir du fond du récipient de chauffage (44).

7. Appareil de chauffage selon la revendication 6, dans lequel la base de guidage comprend une paire d'éléments de rail faisant saillie vers le haut et le rail de guidage comprend une paire d'éléments de rail complémentaires faisant saillie vers le bas à partir du fond du récipient de chauffage (44).

8. Appareil de chauffage selon l'une quelconque des revendications 1 à 7, comprenant en outre un mécanisme de verrouillage (47, 95) pour verrouiller le récipient de chauffage (44) en place par rapport à la chambre de chauffage (33), l'engrenage d'entraînement (55) étant engagé avec l'engrenage de transmission (59).

9. Appareil de chauffage selon la revendication 8, dans lequel le mécanisme de verrouillage (47, 95) comprend un élément de verrouillage sollicité par ressort (82, 95) et une ouverture de verrouillage (83, 96).

10. Appareil de chauffage selon l'une quelconque des revendications 1 à 9, comprenant en outre un plateau tournant (39) pour supporter un article à chauffer, et un élément de support rotatif pour supporter de façon rotative ledit plateau tournant sur la paroi de fond (38) de ladite chambre de chauffage (33), suivant une disposition telle que soit ledit récipient de chauffage, soit ledit plateau tournant et l'élément de support rotatif sont montés de façon sélective dans ladite chambre de chauffage ; dans lequel ledit élément de support rotatif comprend une partie annulaire centrale (86) qui est adaptée pour s'engager avec l'engrenage d'entraînement (55) si bien que la force d'entraînement en vue de la rotation du mécanisme d'agitation (45) et la force d'entraînement en vue de la rotation du plateau tournant sont toutes deux fournies par l'engrenage d'entraînement (55).

11. Appareil de chauffage selon la revendication 10, dans lequel ledit anneau est constitué par une série de griffes espacées circonférentiellement et faisant saillie vers l'intérieur, destinées à s'engager avec l'engrenage d'entraînement (55).

12. Appareil de chauffage selon la revendication 11, dans lequel le nombre desdites griffes est un quotient obtenu en divisant le nombre de dents dudit engrenage d'entraînement (55) par un nombre entier.

13. Appareil de chauffage selon l'une quelconque des revendications 10 à 12, dans lequel ledit élément de support rotatif (41) comprend des galets de support (91) pour faciliter la rotation du plateau par rapport à ladite paroi de fond (38) de ladite chambre de chauffage.

14. Appareil de chauffage (K1, K7′) selon l'une quelconque des revendications précédentes, comprenant en outre:
un élément de contact (176) pour détecter la présence ou l'absence d'un récipient de chauffage (44); et
des moyens de détection de température (183) pour détecter la température du récipient de chauffage (44).

15. Appareil de chauffage selon la revendication 14, dans lequel les moyens de détection de température sont disposés sur l'élément de contact.
